(19) **Europäisches Patentamt / European Patent Office / Office européen des brevets**

(11) **EP 2 141 659 B1**

(12) **EUROPEAN PATENT SPECIFICATION**

(45) Date of publication and mention
of the grant of the patent:
**10.08.2011 Bulletin 2011/32**

(51) Int Cl.:
***G06T 15/40*** *(2011.01)*

(21) Application number: **09251673.1**

(22) Date of filing: **29.06.2009**

(54) **Graphics processing with hidden surface removal**

Grafikverarbeitung mit versteckter Oberflächenentfernung

Traitement de graphiques avec retrait de la surface cachée

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.06.2008 US 215920**

(43) Date of publication of application:
**06.01.2010 Bulletin 2010/01**

(73) Proprietor: **Intel Corporation**
**Santa Clara, CA 95052 (US)**

(72) Inventor: **Farrel, Robert**
**Granite Bay, California 95746 (US)**

(74) Representative: **Beresford, Keith Denis Lewis**
**Beresford & Co.**
**16 High Holborn**
**London**
**WC1V 6BX (GB)**

(56) References cited:
**US-A- 5 579 455      US-A1- 2002 118 189**
**US-B1- 7 030 877     US-B1- 7 375 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background

This relates generally to graphics processing for integrated circuit processing devices.

In graphics processing, three dimensional objects can be represented as a series of triangles having three points. The three points can be used to establish the so-called plane equation that represents a plane including the three points. The plane equation indicates the orientation of each triangle point relative to a display screen plane.

Hidden surface removal or Z-buffering tracks the depth of pixels to reduce the processing carried out on polygons that are hidden behind other polygons in a scene.

Identifying and culling occluded pixels of polygons may represent a significant opportunity for performance improvement.

United States Patent Application Publication US 2002/0118189 A1 discloses an efficient way to determine which objects in a 3D image are to be displayed and which are not because they are obscured by other displayed objects. Displayable elements are assigned depth values defining their relative perceived nearness to the viewer of the image. A comparison of depth values determines which elements are to be displayed and which are not to be displayed because they are obscured by displayed elements. Rather than comparing the depth value of every pixel in a displayable object to determine whether it is to be displayed, the invention compares groups of pixels defined by spans. Minimum and maximum depth values are determined for each span so that depth variations within a span can be accommodated. Masks are used when only partial spans are to be considered because some pixels in a span are outside the pixel boundaries being considered in a particular comparison.

United States Patent document US 5,579,455 discloses a hierarchical Z-buffer scan-conversion algorithm that does well on both (a) quickly rejecting most of the hidden geometry in a model, and (b) exploiting the spatial and temporal coherence of the images being generated. The method uses two hierarchical data structures, an object-space octree and an image-space Z-pyramid, in order to accelerate scan conversion. The two hierarchical data structures make it possible to reject hidden geometry very rapidly while rendering visible geometry with the speed of scan conversion. For animation purposes, the algorithm is also able to exploit temporal coherence. The resulting method is well suited to models with high depth complexity, achieving significant speedup in some cases compared to ordinary scan conversion.

United States Patent document US 7,375,727 B1 describes a method that makes Z-buffer rendering of three-dimensional scenes more efficient through a method for occlusion culling by which occluded geometry is removed prior to rasterization. The method uses hierarchical z-buffering to reduce the quantity of image and depth information that needs to be accessed. A separate culling stage in the graphics pipeline culls occluded geometry and passes visible geometry on to a rendering stage. The culling stage maintains its own z-pyramid in which z-values are stored at low precision (e.g., in 8 bits). The efficiency of hierarchical z-buffering is improved through hierarchical evaluation of line and plane equations.

Brief Description of the Drawings

Figure 1 is a schematic depiction of a processor-based device in accordance with one embodiment;
Figure 2 is a depiction of a block of pixels useful in accordance with one embodiment of the present invention;
Figure 3 is a depiction of the analysis used for depth testing in accordance with one embodiment of the present invention; and
Figure 4 is a flow chart for depth testing in accordance with one embodiment.

Detailed Description

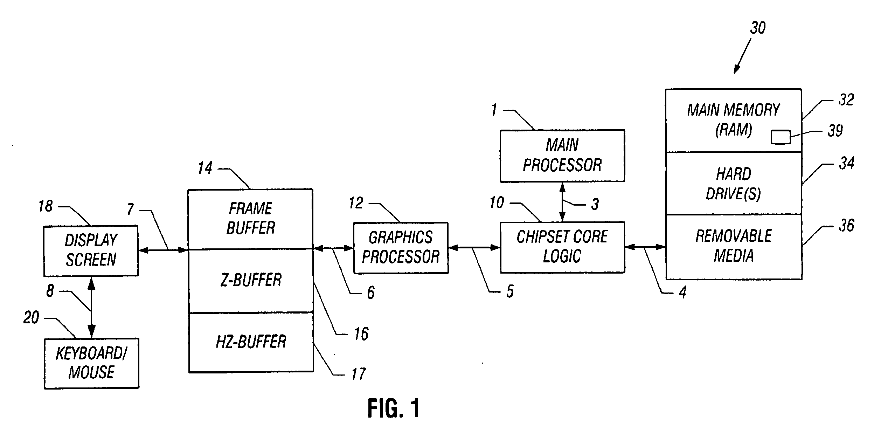

Referring to Figure 1, a processor-based system, according to one embodiment of the present invention, is capable of high performance three dimensional graphics processing. In one embodiment, the system includes a main processor 1, chipset core logic 10, graphics processor 12, frame buffer 14, Z-buffer 16, HZ or hierarchical Z-buffer 17, display screen 18, keyboard/mouse 20, and memory 30. The memory 30 may comprise any suitable memory storage device and, in one embodiment, includes a main memory 32 implemented with random access memory chips, one or more hard drives 34, and removable media 36, such as magnetic or optical disks.

The processor 1 may be coupled to a chipset core logic via bus 3. The chipset core logic 10, coupled to the graphics processor 12 via a bus 5, may be coupled to the frame buffer, as well as the Z-buffer 16 and hierarchical Z-buffer 17, via bus 6. The frame buffer 14, Z-buffer 16, and hierarchical Z-buffer 17 are coupled to the display screen 18 via bus 7, and display screen 18 is coupled to keyboard/mouse 20 via the bus 8.

Other user interface elements, such as audio speakers, microphones, joy sticks, steering wheels, printers, musical instrument digital interface keyboards, virtual reality hoods, moveable seats, and environments may be part of the processing system, to mention a few examples.

The architecture shown in Figure 1 is exemplary and is only one of many processing architectures that may be utilized in accordance with some embodiments of the present invention. The memory 30 may constitute a computer readable medium which is any device, whether active or passive, containing computer instructions for instructing a processor or containing computer data, such as a hard disk, a floppy disk, a compact disk, a random access memory, an optical memory, or any semiconductor memory.

In accordance with some embodiments of the present invention, less than all the pixels of a group of pixels may be depth tested instead of testing all the pixels of the group. A depth test is a test of the distance of a particular pixel into the display screen. The depth testing may be used to determine pixels that are occluded. The occluded pixels of a polygon need not be processed. This elimination of occluded pixel processing can improve graphics performance.

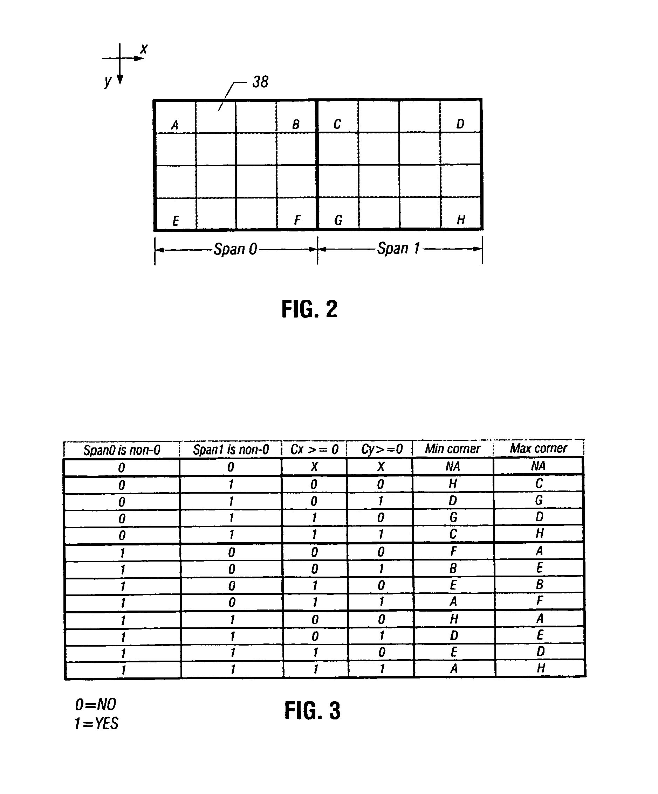

Referring to Figure 2, a plurality of pixels may be grouped into what may be called a block. The block may include a number of pixels, usually at least four pixels, that are contiguous. The block may be rectangular, but other shapes may also be used. By analyzing the depths of representative pixels of the block, one can determine, in many cases for the block as a whole, whether the block would be occluded. As a result, depth testing may be accelerated since depth testing each and every pixel is not necessary in every case. Likewise, in many cases for the block as a whole, one can determine that the block is not occluded, therefore none of the pixels in the block are occluded and thus testing every pixel is not necessary.

Thus, referring to Figure 2, in one embodiment, a first rectangularly arranged group of 16 pixels 38 may constitute a span zero and a second group of 16 rectangularly arranged pixels 38 constitute a span one. In this embodiment, the block that is being analyzed constitutes spans zero and one, including 32 pixels which, in some cases, can be analyzed as a group to improve depth testing speed.

The graphics pipeline, including, for example, the flow of data through the graphics processor 12, may provide data that represents triangles, in turn, represented by three points. Each point is associated with a depth or Z value.

A plane equation characterizes the depth of each pixel within the triangle, where Z is the depth:

$$Z = C_0 + C_x(x - X_{ref}) + C_y(y - Y_{ref}).$$

Thus, the plane equation defines a plane of the pixels forming a triangle and defines a tilt of that plane relative to a display screen. In some embodiments, the coefficients $C_x$ and $C_y$ and, particularly, their signs are used to determine worst case corners for the entire block, in a block using a rectangular array of pixels. The worst case corners are the corners with the minimum and the maximum depths of any pixels in the block.

As indicated in Figure 2, the X axis increases from left to right and the Y axis increases from top to bottom in this embodiment. Thus, for example, the pixel D, has a higher X value than the pixels labeled A, B, or C. And the pixel E has a higher Y value than the pixel A. The pixel H has both a higher Y and a higher X value than the pixel A.

The hierarchical Z-buffer or HZ-buffer 17 (Figure 1) is constructed from the Z-buffer 16 and accumulates the minimum and maximum values for all the previously rendered pixel locations for a block of pixels, being one span in one embodiment. Then, subsequent pixel locations have their polygons tested against the values in the hierarchical Z-buffer 17 to see if those polygons are hidden. If they are hidden, they may be culled, resulting in processing savings.

When testing against the values in the hierarchical Z-buffer, eight different tests are conventionally used in graphics processing. A "less than" test, a "less than or equal to" test, a "greater than" test, a "greater than or equal to" test, an "equal" test, a "not equal" test, an "always pass" test, and a "never pass" test are utilized. Generally, the always pass and the never pass involve no testing whatsoever and are of no interest in the present context.

Figure 3 illustrates an example of how the depth test is done, in one embodiment, using a rectangular pixel array. The test is based in part on whether or not each span is non-zero. A span is non-zero if at least one pixel in the span is actually "lit" or activated. If no pixel in the span is lit then the span can be ignored during depth testing.

Also, the test determines whether the plane equation coefficients $C_x$ is greater than or equal to zero, (i.e. is positive) and whether the plane equation coefficient $C_y$ is greater than or equal to zero (i.e. positive). Then the minimum corner and the maximum corners for the block consisting of the span zero and span one, is identified in the left and right most columns. (Of course, the column or structure defined in Figure 3 may not actually be utilized in embodiments of the present invention, but is provided primarily for comprehension and illustration of embodiments of the present invention).

Thus, the first horizontal line in Figure 3 is the situation where no pixel in either span is lit. The first line is, therefore, of no interest in the present context.

The fifth horizontal line is the situation where no pixel in span zero is lit, but at least one pixel in span one is lit. In this case, both coefficients $C_x$ and $C_y$ are positive. In such case, given the way that X and Y increase as indicated in Figure 2, the minimum corner is the pixel C and the maximum corner is clearly the pixel H.

Once the minimum and maximum corners have been determined, the next step, in one embodiment, is to analyze the minimum and maximum corners for a given group of pixels against a value currently stored in the hierarchical Z-buffer 17. For example, if the application for the graphics system uses a "less than" test, then any depth that is lower than the minimum depth value in the hierarchical Z-buffer passes and any depth value larger than the maximum depth fails. In such case, the minimum corner is compared to the maximum value in the hierarchical Z-buffer. If the minimum corner is greater than the hierarchical Z-buffer maximum, then every pixel in the block is greater than the hierarchical Z-buffer maximum value and no pixel in the block passes. Then, the maximum corner in the block at issue is compared to the hierarchical Z-buffer minimum value. If the value of the maximum corner is less than the hierarchical Z-buffer minimum value, then all the pixels in the block are less than the hierarchical Z-buffer minimum value and, in this case, all the pixels of the block pass as a group, without analyzing every pixel.

If neither of these comparisons works, then the savings possible with embodiments of the present invention are not applicable and the values of every pixel may be conventionally compared in the block one-by-one against the values in the hierarchical Z-buffer. In such case, no time savings may be achieved, but, overall, because the tests described herein are often successful, in some embodiments significant time savings may be achieved.

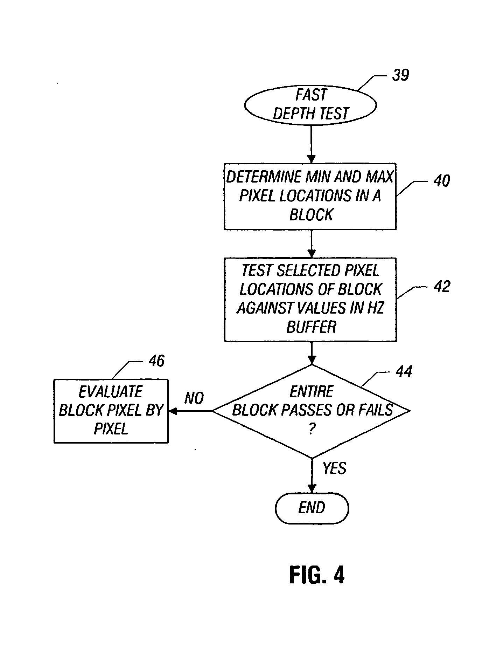

Referring to Figure 4, in accordance with one embodiment, a sequence for implementing a fast depth test 39 includes a sequence. In one embodiment, the sequence may be implemented in software. In such case, the software representing the sequence 39 may be stored in any suitable storage or memory, including the main memory 32, as depicted in Figure 1. In such case, the software sequence is stored in a computer readable medium executable by a computer that includes one or more of the processor 1, processor 12, or any other suitable processor of a computer or processor-based system.

As indicated in block 40, the minimum and maximum pixel locations in a block are determined in an embodiment using a rectangular block. In some cases, it may also be determined whether any of the pixels in the block or any of the pixels in any span making up the block are lit. If none of the pixels are lit, the span or block may be ignored.

Then, the selected pixel locations representative of the minimum and maximum values of a block are tested against the minimum and maximum values in the hierarchical Z-buffer 17, as indicated in block 42. The exact test that is done is dependent upon the type of system implemented by the applicable application. In one example, a "less than" test may be utilized, but other tests may also be utilized. In such cases, it is possible to deduce, based on the minimum and maximum values of a group of pixels, whether or not all the pixels would pass or fail the depth test.

As indicated in Figure 4, in block 44 a check determines whether the block as a whole passes or fails. If so, the processing of the block is done and the next block can be acquired and the processing repeated. If the block neither passes or fails, then a conventional depth test is done (block 46), evaluating each pixel of a block pixel-by-pixel. In this case, the possibility of treating the block as a whole and avoiding the need to test every pixel in the block is not possible.

The size of the block and the constituent span or spans is subject to considerable variation, although in general it would seem to make sense to use at least four pixels in any analysis. In addition, the number of spans may be changed from two and could be any number from one span upwards. It does not matter that some pixels of a span are not lit. In addition, two sets of eight pixels can be analyzed in parallel, in one embodiment.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom.

**Claims**

1. A method implemented on a graphics processor (12) for depth testing blocks of pixels (38), wherein all pixels (38) in a block are part of a plane described by a plane equation, the method comprising:

   identifying (40) a minimum and a maximum corner of each block of pixels (38) using a pair of coefficients associated with the plane equation; and
   comparing (42) depth values of said corners of each block of pixels (38) to corresponding values stored in a buffer to determine if all the pixels (38) in the block are occluded;

   **characterised in that**:

   the depth testing is performed on a block consisting of at least two spans of pixels (38), prior to which it is determined whether all of the pixels (38) of any of the at least two spans are not lit, and, if so, those spans are ignored for purposes of depth testing, and wherein the identified minimum and maximum corners correspond to the corners of said at least two spans of pixels.

2. The method of claim 1 wherein said method is performed on a block of pixels (38) that is a rectangular array of pixels (38), said minimum and maximum corners corresponding to corners of said rectangular array of pixels (38).

3. The method of claim 2 including comparing (42) the minimum and maximum depth values of the block of pixels (38) to the minimum and maximum values stored in a hierarchical Z-buffer (17), and depth testing (39) at least two spans of pixels (38).

4. The method of claim 3 including determining (44) whether comparing the minimum and maximum depth values results in uncertain results and, if so, depth testing (46) each pixel (38) of the block.

5. An apparatus for depth testing blocks of pixels (38), wherein all pixels (38) in a block are part of a plane described by a plane equation, the apparatus comprising:

   a frame buffer (14); and
   a graphics processor (12) coupled to said frame buffer (14), wherein:
   the graphics processor (12) is adapted to identify (40) a minimum and a maximum corner of each block of pixels (38) using a pair of coefficients associated with the plane equation;
   the graphics processor (12) is adapted to compare (42) depth values of said corners of each block of pixels (38) to corresponding values stored in a buffer to determine (44) if all the pixels (38) in the block are occluded;
   **characterised in that**:
   the graphics processor (12) is adapted to perform (39) depth testing on a block consisting of at least two spans of pixels (38) wherein the identified minimum and maximum corners correspond to the corners of said at least two spans of pixels, and
   the graphics processor (12) is adapted to determine, prior to the depth testing (39), whether all of the pixels (38) of any of the at least two spans are not lit, and, if so, to ignore those spans for purposes of depth testing (39).

6. The apparatus of claim 5, wherein said graphics processor (12) is adapted to use a block of pixels (38) that is a rectangular array of pixels (38) and said minimum and maximum corners correspond to corners of said rectangular array of pixels (38).

7. The apparatus of claim 6, wherein said graphics processor (12) is further adapted to identify the corner pixels (38) of said rectangular array with maximum and minimum depth values.

8. The apparatus of claim 6 including a hierarchical Z-buffer (17) coupled to said graphics processor (12), said graphics processor (12) is adapted to compare (42) the minimum and maximum depth values of a block of pixels (38) to the minimum and maximum values stored in the hierarchical Z-buffer (17).

9. The apparatus of claim 8 wherein said graphics processor (12) is further adapted to determine whether comparing the minimum and maximum depth values results in uncertain results and, if so, to depth test (46) each pixel (38) of the block.

**Patentansprüche**

1. Auf einem Grafikprozessor (12) implementiertes Verfahren zur Tiefenprüfung von Pixelblöcken (38), wobei alle Pixel (38) in einem Block Teil einer durch eine Ebenengleichung beschriebenen Ebene sind, wobei:

   eine Minimum- und eine Maximum-Ecke jedes Pixelblocks (38) unter Verwendung eines mit der Ebenengleichung verknüpften Koeffizientenpaares identifiziert werden (40) und
   die Tiefenwerte der Ecken jedes Pixelblocks (38) mit entsprechenden, in einem Zwischenspeicher abgelegten Werten verglichen werden (42), um festzustellen, ob alle Pixel (38) in dem Block verdeckt sind,
   **dadurch gekennzeichnet, dass**:
   die Tiefenprüfung an einem aus mindestens zwei Pixelbereichen (38) bestehenden Block durchgeführt wird, nachdem festgestellt wurde, ob alle Pixel (38) eines der mindestens zwei Bereiche unbeleuchtet sind, und gegebenenfalls diese Bereiche für die Zwecke der Tiefenprüfung ignoriert werden, und wobei die identifizierten Minimum- und Maximum-Ekken den Ecken der mindestens zwei Pixelbereiche entsprechen.

2. Verfahren nach Anspruch 1, das an einem aus einem rechteckigen Pixelarray (38) bestehenden Pixelblock (38) durchgeführt wird, wobei die Minimum- und Maximum-Ecken den Ecken des rechteckigen Pixelarrays (38) entsprechen.

3. Verfahren nach Anspruch 2, bei dem die minimalen und maximalen Tiefenwerte des Pixelblocks (38) mit den in einem hierarchischen Z-Zwischenspeicher (17) abgelegten minimalen und maximalen Werten verglichen (42) und mindestens zwei Pixelbereiche (38) tiefengeprüft (39) werden.

**4.** Verfahren nach Anspruch 3, bei dem festgestellt wird (44), ob ein Vergleich der minimalen und maximalen Tiefenwerte zu unsicheren Ergebnissen führt, und gegebenenfalls jedes Pixel (38) des Blocks tiefengeprüft (46) wird.

**5.** Gerät zur Tiefenprüfung von Pixelblöcken (38), wobei alle Pixel (38) in einem Block Teil einer durch eine Ebenengleichung beschriebenen Ebene sind, wobei das Gerät umfasst:

　　einen Bildzwischenspeicher (14) und
　　einen mit dem Bildzwischenspeicher (14) gekoppelten Grafikprozessor (12), wobei:
　　der Grafikprozessor (12) dazu ausgelegt ist, eine Minimum- und eine Maximum-Ecke jedes Pixelblocks (38) unter Verwendung eines mit der Ebenengleichung verknüpften Koeffizientenpaares zu identifizieren, und
　　der Grafikprozessor (12) dazu ausgelegt ist, Tiefenwerte der Ecken jedes Pixelblocks (38) mit entsprechenden in einem Zwischenspeicher abgelegten Werten zu vergleichen (42), um festzustellen, ob alle Pixel (38) in dem Block verdeckt sind,
　　**dadurch gekennzeichnet, dass**:
　　der Grafikprozessor (12) dazu ausgelegt ist, die Tiefenprüfung an einem aus mindestens zwei Pixelbereichen (38) bestehenden Block durchzuführen (39), wobei die identifizierten Minimum- und Maximum-Ecken den Ecken der mindestens zwei Pixelbereiche entsprechen, und
　　der Grafikprozessor (12) dazu ausgelegt ist, vor der Tiefenprüfung (39) festzustellen, ob alle Pixel (38) eines der mindestens zwei Bereiche unbeleuchtet sind, und gegebenenfalls diese Bereiche für die Zwecke der Tiefenprüfung (39) zu ignorieren.

**6.** Gerät nach Anspruch 5, wobei der Grafikprozessor (12) dazu ausgelegt ist, einen aus einem rechteckigen Pixelarray (38) bestehenden Pixelblock (38) zu verwenden, und wobei die Minimum- und Maximum-Ecken Ekken des rechteckigen Pixelarrays (38) entsprechen.

**7.** Gerät nach Anspruch 6, wobei der Grafikprozessor (12) ferner dazu ausgelegt ist, die Eckpixel (38) des rechteckigen Arrays mit maximalen und minimalen Tiefenwerten zu identifizieren.

**8.** Gerät nach Anspruch 6, das einen mit dem Grafikprozessor (12) gekoppelten hierarchischen Z-Zwischenspeicher (17) umfasst, wobei der Grafikprozessor (12) dazu ausgelegt ist, die minimalen und maximalen Tiefenwerte eines Pixelblocks (38) mit den in dem hierarchischen Z-Zwischenspeicher (17) abgelegten minimalen und maximalen Werten zu vergleichen (42).

**9.** Gerät nach Anspruch 8, wobei der Grafikprozessor (12) ferner dazu ausgelegt ist festzustellen, ob ein Vergleich der minimalen und maximalen Tiefenwerte zu unsicheren Ergebnissen führt, und gegebenenfalls jedes Pixel (38) des Blocks tiefenzuprüfen (46).

## Revendications

**1.** Procédé mis en oeuvre sur un processeur graphique (12) pour réaliser un test de profondeur sur des blocs de pixels (38), dans lequel tous les pixels (38) dans un bloc font partie d'un plan décrit par une équation de plan, le procédé comprenant le fait :

　　d'identifier (40) un coin minimum et un coin maximum de chaque bloc de pixels (38) en utilisant une paire de coefficients associés à l'équation de plan ; et
　　de comparer (42) des valeurs de profondeur desdits coins de chaque bloc de pixels (38) à des valeurs correspondantes mémorisées dans une mémoire tampon pour déterminer si tous les pixels (38) dans le bloc sont cachés ;
　　**caractérisé en ce** qui :
　　le test de profondeur est réalisé sur un bloc composé d'au moins deux plages de pixels (38), préalablement auquel on détermine si tous les pixels (38) de l'une quelconque des au moins deux plages ne sont pas activés, et, si c'est le cas, ces plages sont ignorées dans le cadre du test de profondeur, et dans lequel les coins minimum et maximum identifiés correspondent aux coins desdites au moins deux plages de pixels.

**2.** Procédé de la revendication 1, ledit procédé étant réalisé sur un bloc de pixels (38) qui est un réseau rectangulaire de pixels (38), lesdits coins minimum et maximum correspondant aux coins dudit réseau rectangulaire de pixels (38).

**3.** Procédé de la revendication 2, comportant le fait de comparer (42) les valeurs de profondeur minimale et maximale du bloc de pixels (38) aux valeurs minimale et maximale mémorisées dans une matrice Z hiérarchique (17), et de réaliser un test de profondeur (39) d'au moins deux plages de pixels (358).

**4.** Procédé de la revendication 3, comportant le fait de déterminer (44) si la comparaison des valeurs de profondeur minimale et maximale aboutit à des résultats incertains, et si c'est le cas, de réaliser un test de profondeur (46) de chaque pixel (38) du bloc.

5. Appareil destiné à réaliser un test de profondeur de blocs de pixels (38), dans lequel tous les pixels (38) dans un bloc font partie d'un plan décrit par une équation de plan, l'appareil comprenant :

    une mémoire tampon de trames (14) ; et
    un processeur graphique (12) couplé à ladite mémoire tampon de trames (14), dans lequel :
    le processeur graphique (12) est adapté pour identifier (40) un coin minimum et un coin maximum de chaque bloc de pixels (38) en utilisant une paire de coefficients associés au plan d'équation ;
    le processeur graphique (12) est adapté pour comparer (42) des valeurs de profondeur desdits coins de chaque bloc de pixels (38) à des valeurs correspondantes mémorisées dans une mémoire tampon pour déterminer (44) si tous les pixels (38) dans le bloc sont cachés ;
    **caractérisé en ce** qui :
    le processeur graphique (12) est adapté pour réaliser (39) un test de profondeur sur un bloc composé d'au moins deux plages de pixels (38) dans lequel les coins minimum et maximum identifiés correspondent aux coins desdites au moins deux plages de pixels ; et
    le processeur graphique (12) est adapté pour déterminer, avant le test de profondeur (39), si tous les pixels (38) de l'une quelconque des au moins deux plages ne sont pas activés, et, si c'est le cas, pour ignorer ces plages dans le cadre du test de profondeur (39).

6. Appareil de la revendication 5, dans lequel ledit processeur graphique (12) est adapté pour utiliser un bloc de pixels (38) qui est un réseau rectangulaire de pixels (38) et lesdits coins minimum et maximum correspondent à des coins dudit réseau rectangulaire de pixels (38).

7. Appareil de la revendication 6, dans lequel ledit processeur graphique (12) est en outre adapté pour identifier les pixels de coins (38) dudit réseau rectangulaire avec les valeurs de profondeur maximale et minimale.

8. Appareil de la revendication 6 comportant une matrice Z hiérarchique (17) couplée audit processeur graphique (12), ledit processeur graphique (12) est adapté pour comparer (42) les valeurs de profondeur minimale et maximale d'un bloc de pixels (38) aux valeurs minimale et maximale mémorisées dans la matrice Z hiérarchique (17).

9. Appareil de la revendication 8, dans lequel ledit processeur graphique (12) est en outre adapté pour déterminer si la comparaison des valeurs de profondeur minimale et maximale aboutit à un résultat incertain et, si c'est le cas, de réaliser un test de profondeur (46) de chaque pixel (38) dans le bloc.

**FIG. 1**

FIG. 2

| Span0 is non-0 | Span1 is non-0 | Cx >= 0 | Cy>=0 | Min corner | Max corner |
|---|---|---|---|---|---|
| 0 | 0 | X | X | NA | NA |
| 0 | 1 | 0 | 0 | H | C |
| 0 | 1 | 0 | 1 | D | G |
| 0 | 1 | 1 | 0 | G | D |
| 0 | 1 | 1 | 1 | C | H |
| 1 | 0 | 0 | 0 | F | A |
| 1 | 0 | 0 | 1 | B | E |
| 1 | 0 | 1 | 0 | E | B |
| 1 | 0 | 1 | 1 | A | F |
| 1 | 1 | 0 | 0 | H | A |
| 1 | 1 | 0 | 1 | D | E |
| 1 | 1 | 1 | 0 | E | D |
| 1 | 1 | 1 | 1 | A | H |

0=NO
1=YES

FIG. 3

FAST
DEPTH TEST — 39

DETERMINE MIN AND MAX
PIXEL LOCATIONS IN A
BLOCK — 40

TEST SELECTED PIXEL
LOCATIONS OF BLOCK
AGAINST VALUES IN HZ
BUFFER — 42

46 —
EVALUATE
BLOCK PIXEL BY
PIXEL

NO

ENTIRE
BLOCK PASSES OR FAILS
?
— 44

YES

END

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020118189 A1
- US 5579455 A
- US 7375727 B1